# EUROPEAN PATENT SPECIFICATION

(11) **EP 2 634 276 B1**
(45) Date of publication and mention of the grant of the patent: **08.07.2015**
(21) Application number: 13157495.6
(22) Date of filing: 01.03.2013
(51) Int. Cl.: C22C 13/00, C22C 1/02

(54) **Slide material with a tin matrix and bearing device**
Gleitmaterial mit einer Zinn-Matrix und Lagervorrichtung
Matériau glissant avec une matrice d'étain et dispositif de palier

(30) Priority: 02.03.2012 JP 2012046500
(43) Date of publication of application: 04.09.2013
(73) Proprietor: Daido Metal Company Ltd., Nagoya-shi, Aichi 4600008 (JP)
(72) Inventor: Kurimoto, Satoru, Inuyama-shi, Aichi (JP); Kawakami, Naohisa, Inuyama-shi, Aichi (JP); Toda, Kazuaki, Inuyama-shi, Aichi (JP)
(74) Representative: Brown, Fraser Gregory James

(56) References cited:
- US-A1- 2004 264 820
- US-A1- 2004 265 618
- MOAZAMI GOUDARZI M ET AL: "Investigation of characteristics of tin-based white metals as a bearing material", MATERIALS AND DESIGN, LONDON, GB, vol. 30, no. 6, 1 June 2009 (2009-06-01), pages 2283-2288, XP026079057, ISSN: 0261-3069, DOI: 10.1016/J.MATDES.2008.07.056 [retrieved on 2008-08-19]

## Description

Embodiments disclosed herein relate to a slide material and a bearing device.

### BACKGROUND

Slide materials such as slide bearings are required to improve their performance against increasing load while avoiding the use of substances of concern such as Pb. Goudarzi et al (Materials and Design vol. 30, pages 2283-2288 (2009)) discusses ASTM B23-alloy 2 and alloy 3 and indicates that alloy 2 (which contains Pb) has more resistance to wear. Further, JP 2011-513592 A proposes adding elements such as Co, Mn, Sc, and Ge to a Sn-based slide material primarily composed of Sn-Sb-Cu. JP 2011-513592 A teaches that the resulting Sn-Cu and Sn-Sb precipitates, being refined and truncated, strengthen the Sn-based matrix of the slide material. Notably, JP 2011-513592 A teaches improving the strength and wear resistance of the slide material through hard Sn-Cu precipitate.

However, when the hard Sn-Cu precipitate is harder than the counter element with which it slides, a slide material primarily employing Sn-Cu precipitate is prone to damage the counter element and consequently causes seizure and scoring.

### SUMMARY

It is thus, one object of the present invention to provide a slide material and a bearing device with improved seizure resistance and which are free of substances of concern such a Pb.

The slide material according to claim 1 comprises an Sn-based matrix, 2 or more types of Sn-containing intermetallic compounds harder than the Sn-based matrix being dispersed in the Sn matrix. The Sn-containing intermetallic compounds include at least a primary compound having the greatest hardness among the Sn-containing intermetallic compounds and a secondary compound being second in hardness.

The Sn-based slide material forms 2 or more types of Sn-containing intermetallic compounds depending upon metal elements added to it. The 2 or more types of Sn-containing intermetallic compounds have different hardness. That is, the 2 or more types of Sn-containing intermetallic compounds include a primary compound having the greatest hardness among the Sn-containing intermetallic compounds and a secondary compound being second in hardness. The types of metal elements within the slide material is not limited to 2 types but 3 or more types may exist in the slide material, in which case, 3 or more types of Sn-containing intermetallic compounds may be formed. Supposing that there are 4 types of Sn-containing intermetallic compounds within the Sn-based matrix, the ternary compound is next in hardness to the secondary compound and the quaternary compound is next in hardness to the ternary compound. Further, the slide material may include unavoidable impurities in addition to Sn and various elements that formulate intermetallic compounds with Sn.

The inventors of the present application have found that when 2 or more types of Sn-containing intermetallic compounds exist in the Sn-based matrix, the secondary compound being second in hardness contributes significantly to the improvement in the seizure resistance of the slide material.

When a Sn-based slide material is used in slide members such as a slide bearing member, some of the Sn-based matrix melts out and adheres with the counter element. The components in adhesion with the counter element cause a local contact between the slide material and the counter element which in turn causes local wear and seizure and thus, need to be removed. The adhesion components can be scraped off by hard precipitates within the slide material. However, when the precipitates are harder than the counter element, such as in the case of Sn-Cu mentioned earlier, the counter element is damaged and consequently cause seizure. Given such background, the slide material preferably contains precipitates that scrapeoff the components in adhesion with the counter element while suppressing the damaging of the counter element. In summary, the inventors of the present application have found that controlling the properties of the primary compound having the greatest hardness and the secondary compound being second in hardness within a Sn-based slide member, adhesion components such as the Sn-based matrix in adhesion with the counter element can be scraped off without damaging the counter element to thereby improve the seizure resistance.

The hardness H2 of the secondary compound ranges from 100 to 200 in Vicker's Hardness.

By controlling hardness H2 to range from 100 to 200 in Vicker's Hardness, the adhesion components can be removed from the counter element without damaging the counter element to thereby improve the seizure resistance.

The secondary compound comprises Sn-Ag. Sn-Ag has suitable hardness which is harder than the Sn-based matrix but is softer than the counter element with which the slide material slides. Thus, the secondary compound comprising Sn-Ag removes the adhesion components from the counter element without damaging the counter element to thereby improve the seizure resistance.

In more detail, the Sn-containing intermetallic compounds constituting the slide material improves the seizure resistance by meeting all of the following requirements (1) to (3).
(1) When an area of the observation field is represented by area S, a total area of Sn-containing intermetallic compounds within area S is represented by total area St, an area percentage R of Sn-containing intermetallic compounds with respect to area S is expressed as R=St/S and takes a range of 20%≦R≦60%.
   Total area St of Sn-containing intermetallic compounds indicates the sum of areas of 2 or more types of Sn-containing intermetallic compounds, including at least the primary compound and the secondary compound, within the observation field.
   The Sn-based matrix in adhesion with the counter element is scraped off by the precipitates of the Sn-containing intermetallic compounds within the slide material. It was found that when area percentage R of the Sn-containing intermetallic compounds is less than 20%, the Sn-based matrix in adhesion with the counter element is not scraped off sufficiently. In contrast, when area percentage R of the Sn-containing intermetallic compounds is greater than 60%, the Sn-based matrix in adhesion with the counter element is scraped off excessively. This results in an increase in frictional resistance during the sliding contact between the slide material and the counter element and thereby increasing the amount of heat being generated. Thus, both the removal of adhesion components and heat suppression can be achieved by controlling area percentage R to take the range of 20%≦R≦60%.
   The term "observation field" is used in the embodiments disclosed herein to indicate a given field enlarged by instruments such as a microscope. In the present invention, the observation field is specified based on the area percentage of the Sn-containing intermetallic compounds. Thus, parameters such as the magnification and area of the observation field may be specified to any given setting.
(2) When an area of the secondary compound within area S is represented by secondary area S2, area percentage R2 of the secondary compound with respect to total area St is expressed as R2=S2/St and takes the range of 5%≦R2≦50%.
   The Sn-based matrix in adhesion with the counter element is scraped off by the precipitates of the Sn-containing intermetallic compounds within the slide material. It was found that when area percentage R2 of the secondary compound is less than 5%, the Sn-based matrix in adhesion with the counter element is not scraped off sufficiently. In contrast, when area percentage R2 of the secondary compound is greater than 50%, the overall hardness of the slide material becomes excessive. This results in an increase in frictional resistance during the sliding contact between the slide material and the counter element and thereby increasing the amount of heat being generated. Thus, both the removal of adhesion components and heat suppression can be achieved by controlling area percentage R2 to take the range of 5%≦R2≦50%.
(3) When an area of the primary compound within area S is represented by primary area S1, area percentage R1 of the primary compound with respect to secondary area S2 is expressed as R1=S1/S2 and takes the range of 50%≦R1≦800%.

As mentioned, the Sn-based matrix in adhesion with the counter element is scraped off by the precipitates of the Sn-containing intermetallic compounds within the slide material. The primary compound having the greatest hardness is highly capable of removing the adhesion components, but is also prone to damage the counter element. Thus, by controlling area percentage R1 which indicates the relative area of the primary compound to the secondary compound, both the removal of adhesion components and damage suppression of the counter element can be achieved. It was found that when area percentage R1 of the primary compound is less than 50%, the Sn-based matrix in adhesion with the counter element is not scraped off sufficiently. In contrast, when area percentage R1 of the primary compound is greater than 800%, the overall hardness of the slide material becomes excessive. This results in an increase in frictional resistance during the sliding contact between the slide material and the counter element and thereby increasing the amount of heat being generated. Thus, both the removal of adhesion components and heat suppression can be achieved by controlling area percentage R1 to take the range of 50%≦R1≦800%.

In order to exert outstanding seizure resistance, the area percentages preferably fall within the following ranges: area percentage R≧22% AND area percentage R2≧18% AND area percentage R1≦320%.

According to the slide material of claim 2, hardness H2 of the secondary compound is 3 times or greater than hardness Hm of the Sn-based matrix.

By controlling the relation of hardness H2 and hardness Hm to Hm×3≦H2, the removal of adhesion components from the counter element is facilitated, to thereby improve the seizure resistance.

According to the slide material of claim 3, the secondary compound comprises a needle-like crystal having a minor diameter and a major diameter. When an area of the needle-like crystal having a major diameter of 5 µm or greater is represented by long crystal area Sx, area percentage Rx of the needle-like crystal having the major diameter of 5 µm or greater with respect to secondary area S2 can be described as Rx=Sx/S2 and takes the range of 50%≦Rx.

Assuming that the area of a crystal is constant, the total length of the outer perimeter of the crystal increases as the difference of the minor diameter and the major diameter becomes greater. This means that, when based on projected area, the total length of the outer perimeter of a needle-like crystal is greater as compared, for example, to a nearly square crystal having the same area measurement. The Sn-containing intermetallic compounds of the slide material are precipitates within the Sn-based matrix. The Sn-containing intermetallic compounds are thus, retained by the Sn-based matrix. The total length of the Sn-containing intermetallic compounds in contact with the Sn-based matrix becomes greater as the outer perimeter of the crystals become greater. As a result, the Sn-containing intermetallic compounds become increasingly surrounded by the Sn-based matrix and are not easily released from the Sn-based matrix. Supposing that an Sn-containing intermetallic compounds are released from the Sn-based matrix, the released Sn-containing intermetallic compounds reside as foreign particles between the slide material and the counter element and may cause seizure. Thus, the secondary compound is formed into a needle-like crystal and among such crystals, area percentage Rx of crystals having a major diameter of 5 µm or greater is controlled to take the range of 50% ≦ Rx. As a result, the secondary compound is prevented from being released from the Sn-based matrix to further improve the seizure resistance.

As recited in claim 5, the slide material is located at a sliding surface side of a bearing member and the bearing member slides with the counter element at its sliding surface. The provision of the slide material improves the seizure resistance of the bearing member.

### BRIEF DESCRIPTION OF THE DRAWINGS

FIG.1 is a cross sectional view schematically indicating a slide member of one embodiment of the present invention.
FIG.2 is a chart indicating the cooling step for manufacturing the slide member of one embodiment of the present invention.
FIGS.3A and 3B are charts indicating the test results of the slide member of one embodiment of the present invention.
FIG.4 is a chart indicating the test results of the slide member of one embodiment of the present invention.
FIG.5 is a chart indicating the conditions applied to a seizure resistance test of the slide member of one embodiment of the present invention.

### DESCRIPTION

Next, embodiments of the present invention will be described in detail through an example of a sliding material being applied to a sliding member.

The description will begin with the process flow for manufacturing the slide member to which the samples of the slide materials are applied.

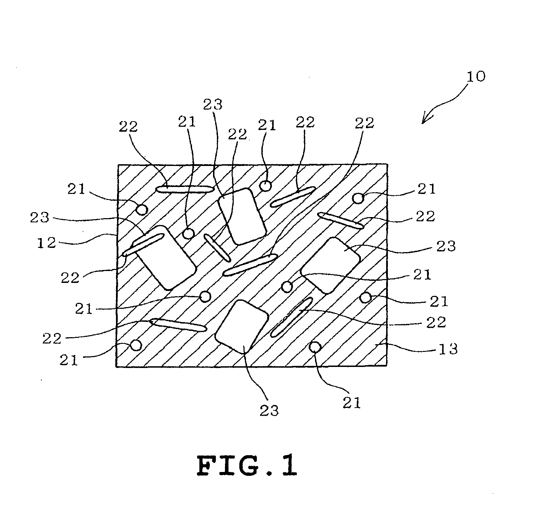

Slide member 10 is provided with bearing alloy layer 12. Bearing alloy layer 12 may typically be provided over the surface of a metal backing not shown which is typically made of steel and molded into a semi-cylindrical or a cylindrical form. Bearing alloy layer 12 is made of a slide material of the present invention. As can be seen in the observation field illustrated in FIG.1, the slide material constituting bearing alloy layer 12, includes precipitates of 2 or more types of Sn-containing intermetallic compounds in the Sn-based matrix. More specifically, FIG.1 shows 3 types of precipitates of Sn-containing intermetallic compounds. The 3 types of Sn-containing intermetallic compounds are controlled to different hardness and are identified as primary compound 21, secondary compound 22, and ternary compound 23 in the order of their hardness. In other words, primary compound 21 has the greatest hardness, which is followed by secondary compound 22, and ternary compound 23 is the softest of the 3 compounds.

For instance, in case bearing alloy layer 12 comprises a slide material including 3 types of additive elements to the Sn matrix, namely Cu, Ag, and Sb, primary compound 21 comprises a Sn-Cu compound forming a granular crystal, secondary compound 22 comprises a Sn-Ag compound forming a needle-like crystal, and ternary compound 23 comprises a Sn-Sb compound forming a quadrature crystal.

Bearing alloy layer 12 is formed by centrifugal casting described below. Each of the elements constituting bearing alloy layer 12 is controlled to a predetermined composition ratio and melted by heating. The molten metal is poured onto the inner peripheral side of the cylindrical metal backing which is made by joining semi-cylindrical steel. The metal backing with the molten metal coating is spun to spread the molten metal evenly over the inner peripheral surface of the metal backing by centrifugal force. The molten metal is thereafter cooled to obtain bearing alloy layer 12 made of the slide material on the inner peripheral side of the metal backing.

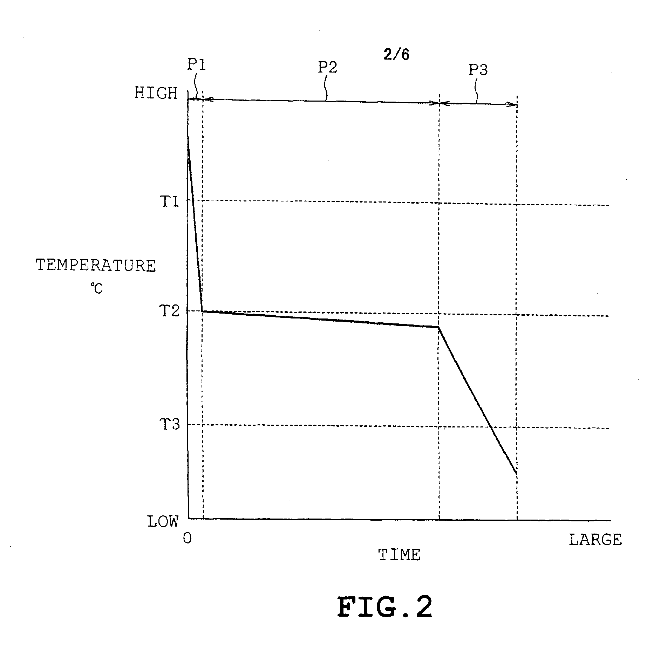

The controlled cooling of the slide material constituting bearing alloy layer 12 allows controlled precipitation of the 2 or more types of the Sn-containing intermetallic compounds. More specifically, each of the Sn-containing intermetallic compounds can be precipitated in the descending order of their hardness by controlled cooling during the casting. For instance, in a slide material including the aforementioned 3 types of Sn-containing intermetallic compounds, namely, Sn-Cu, Sn-Ag, and Sn-Sb, precipitation occurs in the listed sequence of primary compound 21 comprising the Sn-Cu compound, secondary compound 22 comprising the Sn-Ag compound, and finally ternary compound 23 comprising the Sn-Sb compound. In order to increase the amount of precipitation of secondary compound 22, the temperature and duration of cooling step is controlled as indicated in FIG.2.

To describe the control in more detail, the molten metal coated on the metal backing is quenched to precipitation temperature T2 of secondary compound 22 during first cooling period P1 as shown in FIG.2. Thus, the molten metal after exhibiting precipitation temperature T1 of the primary compound 21 for a short period of time, quickly reaches precipitation temperature T2 of secondary compound 22. As a result, the time period in which the slide material exhibits the temperature near precipitation temperature T1 of primary compound 21 is shortened. Then, at second cooling period P2, the molten metal is gradually cooled from or maintained at the precipitation temperature of secondary compound 22. Thus, the molten metal is maintained for a relatively long period of time at the temperature near precipitation temperature T2 of secondary compound 22 to facilitate the precipitation of the secondary compound 22. Then, the molten metal, after being gradually cooled from or maintained at precipitation temperature T2 of secondary compound 22, is quenched in third cooling period P3. Thus, the molten metal, after exhibiting precipitating temperature T3 for a short period of time, is quenched to the temperature in which the entire slide material hardens. The slide material, constituting bearing alloy layer 12, achieves controlled area percentage of primary compound 21, secondary compound 22, and ternary compound 23 dispersed in Sn-based matrix 13 within the observation field through appropriate control of the duration of first cooling period P1, second cooling period P2, and third cooling period P3.

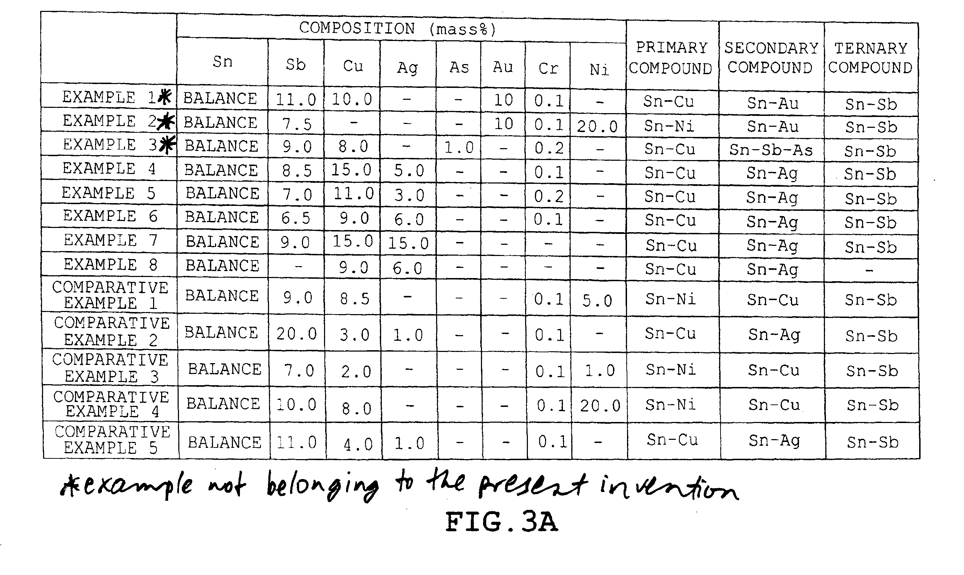

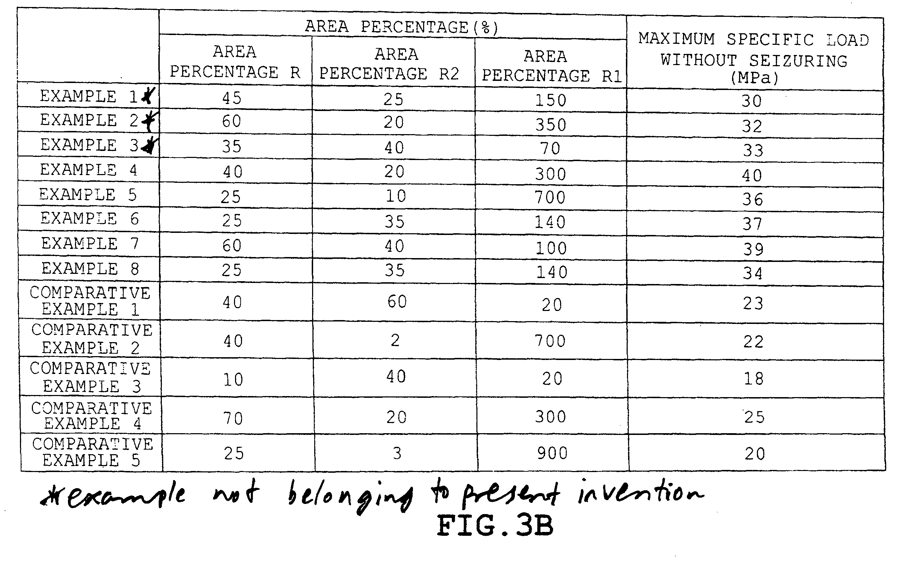

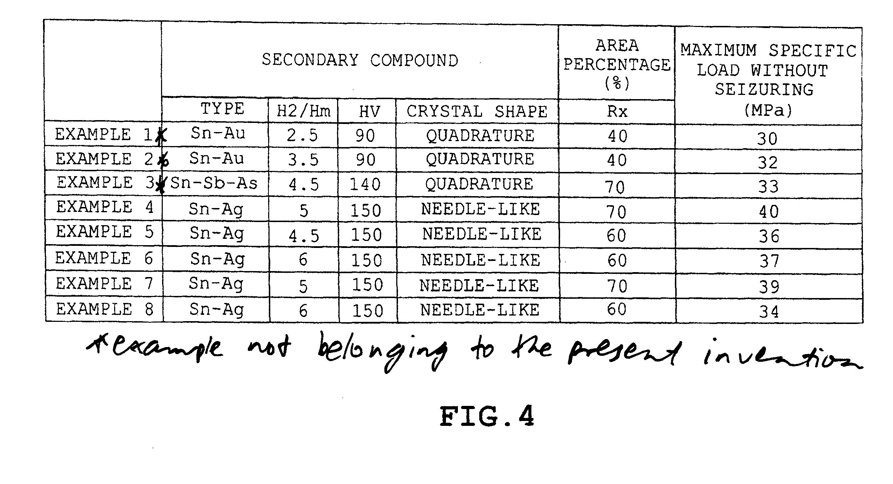

The above steps were followed to obtain samples of slide member 10 identified as EXAMPLES 1 to 8 and slide member COMPARATIVE EXAMPLES 1 to 5 in FIGS.3A, 3B and 4.

### (Seizure Resistance Test)

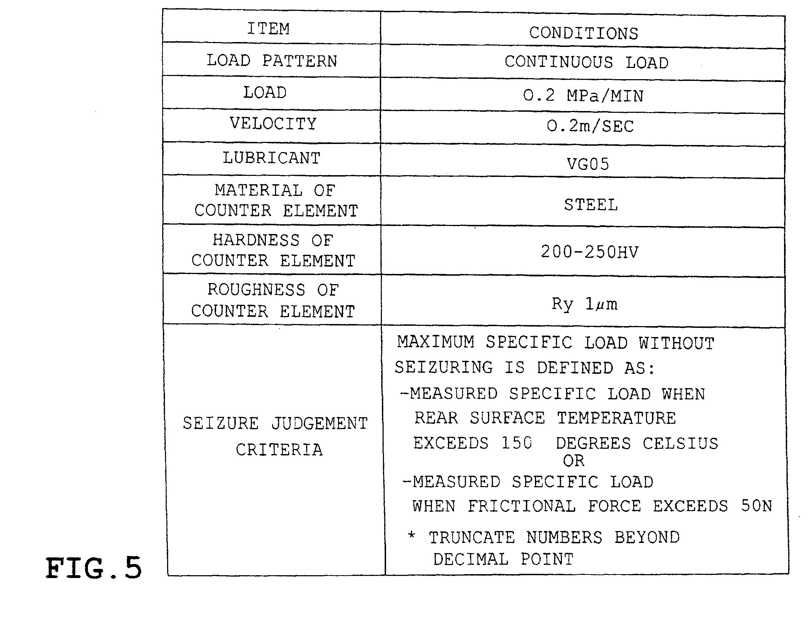

EXAMPLES 1 to 8 and COMPARATIVE EXAMPLES 1 to 5 were verified for their seizure resistance under the test conditions indicated in FIG.5. Continuous load being incremented by 0.2 MPa/min was applied with the velocity specified to 0.2m/sec and VG05 lubricant applied. A shaft made of steel was used as the counter element which measured a Vicker's hardness ranging from 200 to 250 and a surface roughness of Ry 1 µm. The measured load in which the rear surface of EXAMPLES 1 to 8 and COMPARATIVE EXAMPLES 1 to 5 exceeded 150 degrees Celsius or the measured load in which the frictional force exceeded 50N was defined as the maximum specific load (MPa) without seizuring. Numbers beyond the decimal point were truncated from the measured maximum specific load without seizuring.

The result of verification will be given based on FIGS.3A, 3B, and 4 from the stand point of seizure resistance.

First, the impact of the area percentage of Sn-containing intermetallic compounds on seizure resistance will be verified based on FIGS.3A and 3B. EXAMPLES 1 to 8 meet the following requirements.

Requirement (1): When an area of the observation field is represented by area S, a total area of Sn-containing intermetallic compounds within area S is represented by total area St, area percentage R of Sn-containing intermetallic compounds with respect to area S is expressed as R=St/S and takes a range of 20%≦R≦60%.

Requirement (2): When an area of the secondary compound within area S is represented by secondary area S2, area percentage R2 of the secondary compound with respect to total area St is expressed as R2=S2/St and takes the range of 5%≦R2≦50%.

Requirement (3) :When an area of the primary compound within area S is represented by primary area S1, area percentage R1 of the primary compound with respect to secondary area S2 can be described as R1=S1/S2 and takes the range of 50%≦R1≦800%.

EXAMPLES 1 to 8 meeting requirements (1) to (3) exhibit improved seizure resistance as compared to COMPARATIVE EXAMPLES 1 to 5 which do not meet either of requirements (1) to (3). This is believed to be attributable to the capacity of EXAMPLES 1 to 8, meeting requirements (1) to (3), to scrape off the Sn-based matrix in adhesion with the counter element as well as suppressing frictional resistance and heat generation. The test was conducted with an observation field of 110µm×150µm.

In more detail, EXAMPLES 1 to 8 exhibit greater seizure resistance as compared to COMPARATIVE EXAMPLES 3 and 4. In COMPARATIVE EXAMPLE 3, area percentage R defined in requirement (1) is 10% which is below the lowermost limit of 20% and thus, fails to meet requirement (1). In COMPARATIVE EXAMPLE 4, area percentage R defined in requirement (1) is 70% which is above the uppermost limit of 60% and thus, fails to meet requirement (1). When area percentage R is below 20% as in COMPARATIVE EXAMPLE 3, the Sn-based matrix in adhesion with the counter element is not scraped off sufficiently. In contrast, when area percentage R is greater than 60% as in COMPARATIVE EXAMPLE 4, the amount of precipitation of Sn-containing intermetallic compounds with respect to the Sn-based matrix becomes excessive, which leads to increase in frictional resistance and consequently increase in heat generation when the slide material slides with the counter element.

Further, EXAMPLES 1 to 8 have greater seizure resistance as compared to COMPARATIVE EXAMPLES 1, 2, and 5. In COMPARATIVE EXAMPLE 1, area percentage R2 defined in requirement (2) is 60% which is above the uppermost limit of 50% and thus, fails to meet requirement (2). In COMPARATIVE EXAMPLES 2 and 5, area percentage R2 defined in requirement (2) are 2% and 3%, respectively which are below the lowermost limit of 5% and thus, fail to meet requirement (2). When area percentage R2 is above 50% as in COMPARATIVE EXAMPLE 1, the overall hardness of the slide material becomes excessive, which leads to increase in frictional resistance and consequently increase in heat generation when the slide material slides with the counter element. In contrast, when area percentage R2 is below 5% as in COMPARATIVE EXAMPLES 2 and 5, the Sn-based matrix in adhesion with the counter element is not scraped off sufficiently.

Further, EXAMPLES 1 to 8 have greater seizure resistance as compared to COMPARATIVE EXAMPLES 1, 3, and 5. In COMPARATIVE EXAMPLES 1 and 3, area percentage R1 defined in requirement (3) is 20%, respectively, which is below the lowermost limit of 50% and thus, fail to meet requirement (3). In COMPARATIVE EXAMPLE 5, area percentage R1 defined in requirement (3) is 900% which is above the uppermost limit of 800% and thus, fails to meet requirement (3). When area percentage R1 is below 50% as in COMPARATIVE EXAMPLES 1 and 3, the Sn-based matrix in adhesion with the counter element is not scraped off sufficiently. In contrast, when area percentage R1 is above 800% as in COMPARATIVE EXAMPLE 5, the overall hardness of the slide material becomes excessive which leads to increase in frictional resistance and consequently increase in heat generation when the slide material slides with the counter element.

As evidenced above, area percentage R, R2, and R1 of the Sn-containing intermetallic compounds within slide member 10 were each found to determine the seizure resistance of slide member 10.

Next, the relation between secondary compound 22 within slide member 10 and seizure resistance will be verified based on FIG.4.

### (Relation between secondary compound, hardness of Sn-based matrix, and seizure resistance)

Hardness H2 of secondary compound 22 is preferably 3 times or more than hardness Hm of Sn-based matrix 13.

In EXAMPLES 2 to 8, hardness H2 of secondary compound 22 is controlled to 3 times or more than hardness Hm of Sn-based matrix 13. In EXAMPLE 1 on the other hand, hardness H2 of secondary compound 22 is controlled to 2.5 times of hardness Hm of Sn-based matrix 13, meaning that in EXAMPLE 1, H2/Hm<3.

EXAMPLES 2 to 8 exhibit improved seizure resistance as compared to EXAMPLE 1. Thus, in EXAMPLES 2 to 8 in which Hm×3≦H2, hardness H2 of secondary compound 22 is sufficiently greater than hardness Hm of Sn-based matrix 13. As a result, the Sn-based matrix having adhered with the counter element during the sliding movement is scraped off by the hard secondary compound 22 to thereby improve the seizure resistance of EXAMPLES 2 to 8 as compared to EXAMPLE 1.

As evidence above, hardness H2 of secondary compound 22, when in controlled relation with Sn-based matrix 13, was found to facilitate the improvement of seizure resistance.

### (Relation between Vicker's hardness of the secondary compound and seizure resistance)

Hardness H2 of secondary compound 22 ranges from 100 to 200 in Vicker's hardness. In EXAMPLES 3 to 8, hardness H2 of secondary compound 22 ranges from 100 to 200 in Vicker's hardness. In EXAMPLES 1 and 2 on the other hand, hardness H2 of secondary compound 22 is 90 in Vicker's hardness and is less than 100 which is the lower limit of the preferable range. EXAMPLES 3 to 8 exhibit improved seizure resistance as compared to EXAMPLES 1 and 2. The Sn-based matrix having adhered with the counter element during the sliding movement is scraped off without damaging the counter element when hardness H2 of secondary compound 22 is controlled to range from 100 to 200 in Vicker's hardness to thereby improve the seizure resistance of EXAMPLES 3 to 8 as compared to EXAMPLES 1 and 2.

As described above, the controlled Vicker's hardness of secondary compound 22 was found to facilitate the improvement of seizure resistance.

### (Relation between crystal shape of the secondary compound, area percentage of long crystal, and seizure resistance)

Secondary compound 22 is preferably formed into a needle-like crystal having a minor diameter and a major diameter. Further, when the area of a crystal of secondary compound 22 having a major diameter of 5 µm or greater is represented as long crystal area Sx, area percentage Rx of long crystal area Sx with respect to secondary area S2 preferably takes the range of 50% ≦Rx.

EXAMPLES 4 to 8 exhibit improved seizure resistance as compared to EXAMPLES 1 to 3. In EXAMPLES 4 to 8, secondary compound 22 takes a needle-like crystal shape in which the difference in size between the minor diameter and the major diameter is large. Thus, in EXAMPLES 4 to 8 in which secondary compound 22 is formed into a needle-like crystal, the total length of the outer perimeter of the crystal is greater as compared to a quadrature crystal when viewed in plan view. As a result, the total length of secondary compound 22 contacting Sn-based matrix 13 becomes relatively greater and thus, secondary compound 22 is held with relatively stronger force by Sn-based matrix 13. Thus, the precipitate of secondary compound 22 held by Sn-based matrix 13 is not easily released from Sn-based matrix 13. Further, release of secondary compound 22 from Sn-based matrix 13 is believed to be suppressed by controlling area percentage Rx of crystals of secondary compound 22 having a major diameter equal to or greater than 5 µm to take the range of 50%≦Rx.

As described above, the crystal shape of secondary compound 22 and area percentage Rx of the area of long crystals were found to facilitate the improvement of seizure resistance.

### (Types of secondary compounds)

To summarize, EXAMPLES 4 to 8 in which secondary compound 22 comprises Sn-Ag has even more improved seizure resistance as compared to EXAMPLES 1 and 2 in which secondary compound 22 comprises Sn-Au, and EXAMPLE 3 in which secondary compound 22 comprises Sn-Sb-As. In other words, it was found that in a slide material in which 2 or more types of Sn-containing intermetallic compounds precipitates in Sn-based matrix 13, the Sn-based matrix in adhesion with the counter element exhibited particularly improved seizure resistance. Indeed, improvement in seizure resistance was observed in a slide material in which the second compound 22 comprised Sn-Au or Sn-Sb-As, however, the improvement was relatively greater when second compound 22 comprised Sn-Ag. Outstanding seizure resistance was also observed when secondary compound 22 comprised Sn-Ag-Sb or Sn-Ag-Sb-Cu.

Slide member 10 employing the above described slide material is used in applications such as a crankshaft bearing in an internal combustion engine. Such slide member 10 is especially suitable for use in large internal combustion engines used, for example, in ships.

The foregoing description and drawings are merely illustrative of the principles of the present invention and are not to be construed in a limited sense. Various changes and modifications will become apparent to those of ordinary skill in the art. All such changes and modifications are seen to fall within the scope of the invention as defined by the appended claims.

## Claims

1. A cast slide material comprising:
an Sn-based matrix (13);
two or more types of Sn-containing intermetallic compounds harder than the Sn-based matrix being dispersed in the Sn-based matrix;
wherein the Sn-containing intermetallic compounds include at least a primary compound (21) having the greatest hardness among the Sn-containing intermetallic compounds and a secondary compound (22) being second in hardness, wherein the hardness of the secondary compound (22) ranges from 100 to 200 in Vicker's Hardness (Hv) and the secondary compound (22) comprises Sn-Ag, and
wherein the Sn-containing intermetallic compounds satisfy all of:
(1) where an area of the observation field is represented by area S and a total area of Sn-containing intermetallic compounds within area S is represented by total area St, area percentage R of Sn-containing intermetallic compounds with respect to area S is expressed as R=St/S and takes a range of 20%≦R≦60%,
(2) where an area of the secondary compound (22) within area S is represented by secondary area S2, area percentage R2 of the secondary compound with respect to total area St is expressed as R2=S2/St and takes the range of 5%≦R2≦50%, and
(3)where an area of the primary compound (21) within area S is represented by primary area S1, area percentage R1 of the primary compound with respect to secondary area S2 is expressed as R1=S1/S2 and takes the range of 50%≦R1≦800%.

2. The slide material according to claim 1, wherein the hardness of the secondary compound (22) is 3 times or greater than the hardness of the Sn-based matrix.

3. The slide material according to claim 1 or 2, wherein the secondary compound (22) comprises a needle-like crystal having a minor diameter and a major diameter, and
where an area of the needle-like crystal having a major diameter of 5 µm or greater is represented by long crystal area Sx, area percentage Rx of the needle-like crystal having the major diameter of 5 µm or greater with respect to secondary area S2 is expressed as Rx=Sx/S2 and takes the range of 50%≦Rx.

4. The slide material according to any one of claims 1 to 3 wherein the Sn-containing intermetallic compounds further include a ternary compound (23) being next in hardness to the secondary compound (22).

5. A bearing device comprising a bearing member including the slide material according to any one of claims 1 to 4, the slide material being located at a sliding surface side of the bearing member, the bearing member being configured to slide with a counter element at the sliding surface.

## Patentansprüche

1. Gegossenes Gleitmaterial, umfassend:
eine Matrix auf Sn-Basis (13);
zwei oder mehr Arten von Sn-haltigen intermetallischen Verbindungen, die härter als die Matrix auf Sn-Basis sind und in der Matrix auf Sn-Basis dispergiert sind;
wobei die Sn-haltigen intermetallischen Verbindungen wenigstens Folgendes aufweisen: eine primäre Verbindung (21), welche die größte Härte unter den Sn-haltigen intermetallischen Verbindungen aufweist, und eine sekundäre Verbindung (22), welche die zweitgrößte Härte aufweist, wobei die Härte der sekundären Verbindung (22) 100 bis 200, ausgedrückt in Vickershärte (Hv) beträgt, und die sekundäre Verbindung (22) Sn-Ag umfasst, und
wobei die Sn-haltigen intermetallischen Verbindungen alle folgenden Bedingungen erfüllen:
(1) wenn eine Fläche des Beobachtungsfelds durch die Fläche S repräsentiert wird und eine Gesamtfläche der Sn-haltigen intermetallischen Verbindungen in der Fläche S durch die Gesamtfläche St repräsentiert wird, wird der Flächenprozentanteil R der Sn-haltigen intermetallischen Verbindungen in Bezug auf die Fläche S als R=St/S ausgedrückt und befindet sich in einem Bereich von 20%≦R≦60%,
(2) wenn eine Fläche der sekundären Verbindung (22) in der Fläche S durch die sekundäre Fläche S2 repräsentiert wird, wird der Flächenprozentanteil R2 der sekundären Verbindung in Bezug auf die Gesamtfläche St als R2=S2/St ausgedrückt und befindet sich im Bereich von 5%≦R2≦50%, und
(3) wenn eine Fläche der primären Verbindung (21) in der Fläche S durch die primäre Fläche S1 repräsentiert wird, wird der Flächenprozentanteil R1 der primären Verbindung (21) in Bezug auf die sekundäre Fläche S2 als R1=S1/S2 ausgedrückt und befindet sich im Bereich von 50%≦R1≦800%.

2. Gleitmaterial nach Anspruch 1, wobei die Härte der sekundären Verbindung (22) das 3-Fache der Härte der Matrix auf Sn-Basis oder mehr beträgt.

3. Gleitmaterial nach Anspruch 1 oder 2, wobei die sekundäre Verbindung (22) einen nadelförmigen Kristall mit einem kleinen Durchmesser und einem großen Durchmesser umfasst, und
wenn eine Fläche des nadelförmigen Kristalls mit einem großen Durchmesser von 5 µm oder mehr durch die Langkristallfläche Sx repräsentiert wird, wird der Flächenprozentanteil Rx des nadelförmigen Kristalls mit dem großen Durchmesser von 5 µm oder mehr in Bezug auf die sekundäre Fläche S2 als Rx=Sx/S2 ausgedrückt und befindet sich im Bereich von 50%≦Rx.

4. Gleitmaterial nach einem der Ansprüche 1 bis 3, wobei die Sn-haltigen intermetallischen Verbindungen ferner eine ternäre Verbindung (23) umfassen, die bezüglich der Härte auf die sekundäre Verbindung (22) folgt.

5. Lagervorrichtung, umfassend ein Lagerelement, welches das Gleitmaterial nach einem der Ansprüche 1 bis 4 umfasst, wobei das Gleitmaterial an einer Gleitflächenseite des Lagerelements angeordnet ist, wobei das Lagerelement dafür ausgelegt ist, an einem Gegenelement an der Gleitfläche zu gleiten.

## Revendications

1. Matériau glissant de coulée, comprenant :
une matrice à base de Sn (13) ;
deux ou plusieurs types de composés intermétalliques contenant du Sn plus durs que la matrice à base de Sn étant dispersés dans la matrice à base de Sn ;
où les composés intermétalliques contenant du Sn incluent au moins un composé primaire (21) ayant la plus grande dureté parmi les composés intermétalliques contenant du Sn et un composé secondaire (22) qui est le deuxième en dureté, où la dureté du composé secondaire (22) s'étend de 100 à 200 dans la Dureté de Vickers (Hv) et le composé secondaire (22) comprend Sn-Ag, et
où les composés intermétalliques contenant du Sn satisfont tous de :
(1) où une zone du champ d'observation est représentée par la zone S, et une zone totale des composés intermétalliques contenant du Sn dans la zone S est représentée par la zone totale St, le pourcentage de zone R des composés intermétalliques contenant du Sn par rapport à la zone S est exprimée comme R=St/S et occupe une plage de 20%≤R≤60%,
(2) où une zone du composé secondaire (22) dans la zone S est représentée par la zone secondaire S2, le pourcentage de zone R2 du composé secondaire par rapport à la zone totale de St est exprimée comme R2=S2/St et occupe la plage de 5%≤R2≤50%, et
(3) où une zone du composé primaire (21) dans la zone S est représentée par la zone primaire S1, le pourcentage de zone R1 du composé primaire relativement à la zone secondaire S2 est exprimée comme R1=S1/S2 et occupe la plage de 50%≤R1≤800%.

2. Matériau glissant selon la revendication 1, dans lequel la dureté du composé secondaire (22) est 3 fois ou plus élevée à la dureté de la matrice à base de Sn.

3. Matériau glissant selon la revendication 1 ou 2, dans lequel le composé secondaire (22) comprend un cristal semblable à une aiguille ayant un diamètre mineur et un diamètre majeur, et
où une zone du cristal semblable à une aiguille d'un diamètre majeur de 5 µm ou plus grand est représentée par une zone de cristaux longs Sx, le pourcentage de zone Rx du cristal semblable à une aiguille ayant le diamètre majeur de 5 µm ou plus grand par rapport à la zone secondaire S2 est exprimé comme Rx=Sx/S2 et occupe la plage de 50%≤Rx.

4. Matériau glissant selon l'une quelconque des revendications 1 à 3, dans lequel les composés intermétalliques contenant du Sn comprennent en outre un composé ternaire (23) proche en dureté au composé secondaire (22).

5. Dispositif de palier comprenant un élément de palier incluant le matériau glissant selon l'une quelconque des revendications 1 à 4, le matériau glissant étant situé à un côté de surface de glissement de l'élément de palier, l'élément de palier étant configuré pour glisser avec un contre élément à la surface de glissement.
